# EUROPEAN PATENT APPLICATION

(11) **EP 4 613 923 A1**
(43) Date of publication of application: **10.09.2025**
(21) Application number: 23912547.9
(22) Date of filing: 07.11.2023
(51) Int. Cl.: D04H 3/011, D04H 3/147, D06M 15/564

(54) **SPUNBOND NON-WOVEN FABRIC FOR FILTER, AND PREPARATION METHOD THEREFOR**

(30) Priority: 26.12.2022 KR 20220184671
(71) Applicant: Kolon Industries, Inc., Seoul 07793 (KR)
(72) Inventor: KANG, Dong-heon, Seoul 07793 (KR); LEE, Min-ho, Seoul 07793 (KR); CHO, Hee-jung, Seoul 07793 (KR); PARK, Young-shin, Seoul 07793 (KR); CHOI, Woo-seok, Seoul 07793 (KR); JANG, Jung-soon, Seoul 07793 (KR)
(74) Representative: Ter Meer Steinmeister & Partner
(86) International application number: PCT/KR2023/017760
(87) International publication number: WO 2024/143868

(57) **Abstract**

The present disclosure relates to a spunbond non-woven fabric for filters and a method for preparing the same. According to the present disclosure, a spunbond non-woven fabric for filters that exhibits excellent filtration performance while having low pressure loss and high air permeability, and a method for preparing the same are provided.

## Description

### [TECHNICAL FIELD]

The present disclosure relates to a spunbond non-woven fabric for filters and a method for preparing the same.

### [BACKGROUND ART]

A filter is a material or device in which a pressure difference is created between both sides of a partition wall through which a gas or a liquid including different phases passes, thereby separating the different phases from the gas or liquid.

Conventionally, polyolefin-based melt-blown non-woven fabrics, polyolefin-based spunbond non-woven fabrics, and polyester-based spunbond non-woven fabrics, and the like, which have undergone an electrostatic treatment, were mainly applied to the electrostatic filter layer of air filters.

However, the polyolefin-based melt-blown non-woven fabric is prepared from ultra-fine yarn and has good collection efficiency, but has low air permeability and large pressure loss. Therefore, the polyolefin-based melt-blown non-woven fabric is suitable for manufacturing HEPA filters that require high efficiency and low air permeability, but has limitations in its application to cabin filters, bag filters, air conditioning filters, and various intermediate performance filters that require relatively high air permeability.

In the case of polyolefin-based or polyester-based spunbond non-woven fabrics, when suitably designing for filters that require high air permeability, the collection efficiency is reduced relatively. Conversely, when suitably designing for filters that require high collection efficiency, there is a limitation in that the air permeability is reduced relatively.

In recent years, attempts have been made to apply non-woven fabrics prepared through the nano-spinning process to filters to thereby satisfy high air permeability and high collection efficiency at the same time. However, the commercialization of the technology for preparing non-woven fabrics using the nano-spinning process is still insufficient, and even if it is commercialized, there is a limitation in its universal application to intermediate performance filters due to the high manufacturing cost.

### [DETAILED DESCRIPTION OF THE INVENTION]

### [Technical Problem]

It is an object of the present disclosure to provide a spunbond non-woven fabric for filters that exhibits excellent filtration performance while having low pressure loss and high air permeability.

It is another object of the present disclosure to provide a method for preparing the spunbond non-woven fabric for filters.

### [Technical Solution]

According to one embodiment of the present disclosure, there is provided a spunbond non-woven fabric for filters comprising:
a fiber web formed by entangling fine-denier filaments that are split from split type filaments,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

According to another embodiment of the present disclosure, there is provided a method for preparing the spunbond non-woven fabric for filters, the method comprising the steps of:
forming split type filaments that are split into fine-denier filaments including a polyester filament and a polyethylene filament,
forming a fiber web including the split type filaments,
thermally bonding the fiber web to form a pre-bonded fiber web,
applying a physical force to the pre-bonded fiber web to form a spunlace fiber web including the polyester filament and the polyethylene filament that are split from the split type filaments, and
thermally bonding the spunlace fiber web to form a spunbond non-woven fabric,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

Now, a spunbond non-woven fabric for filters and a method for preparing the same according to embodiments of the present disclosure will be described in more detail.

Unless otherwise specified throughout this specification, the technical terms used herein are only for reference to specific embodiments and is not intended to limit the present disclosure.

The singular forms "a", "an", and "the" used herein include plural references unless the context clearly dictates otherwise.

The term "including" or "comprising" as used herein specifies a specific feature, region, integer, step, operation, element and/or component, but does not exclude the presence or addition of a different specific feature, region, integer, step, operation, element, component and/or group.

Further, the terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present disclosure.

As used herein, the term "split type filament" refers to a filament in which two or more polymer components each have a fine-denier filament form and are contained within one filament. The split type filament has a cross-sectional shape that is split into multiple. The split type filament is split into multiple filaments made of respective polymer components by a physical force applied from the outside.

As used herein, the term "denier" is a unit of fineness based on the mass (grams) per 9000 meters of length of a single fiber strand. For example, 1 denier can be expressed as 1 g / 9000 m, or 0.11 mg/m, or 0.11 tex.

According to one embodiment of the disclosure, there is provided a spunbond non-woven fabric for filters comprising:
a fiber web formed by entangling fine-denier filaments that are split from split type filaments,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

As a result of research conducted by the present inventors, it was confirmed that a spunbond non-woven fabric satisfying the configurations as in the above embodiments can exhibit excellent filtration performance while having low pressure loss and high air permeability.

In particular, as the spunbond non-woven fabric for filters includes filaments that satisfies the above configurations, it can increase the collection amount of particles filtered by the non-woven fabric, and reduce the pressure on the surface of the non-woven fabric caused by the particles, thereby ensuring a long service life.

According to one embodiment, the spunbond non-woven fabric for filters includes a fiber web formed by entangling fine-denier filaments that are split from split type filaments.

The term "split type filament" refers to a filament in which two or more polymer components each have a fine-denier filament form and are contained within one filament. The split type filament has a cross-sectional shape that is split into multiple. The split type filament is split into multiple filaments made of respective polymer components by a physical force applied from the outside.

The split form of the split type filament is not particularly limited, and may be determined depending on the shape of a spinneret. As an example, the split type filament may have a cross section such as an orange shape, a hollow shape, or a chrysanthemum shape. Further, the split type filament may be a multi-split filament that is split into 8 to 64 strands. Specifically, the split type filament may be a multi-split filament that is split into 8, 16, 32, or 64 strands.

According to one embodiment, the split type filament has a fineness of 2 to 5 denier, and the fine-denier filament may have a fineness of 0.05 to 0.2 denier.

The fineness of the split type filament is preferably 2 to 5 denier, in consideration of the split number of the fine-denier filament that is split from the split type filament, the mechanical properties of the filament, and the like.

The fineness of the fine-denier filament is preferably 0.05 to 0.2 denier, or 0.06 to 0.2 denier, or 0.06 to 0.15 denier, or 0.06 to 0.13 denier, in consideration of the efficiency of forming the fine-denier filament, the shape maintenance of the fine-denier filament, and the like.

According to one embodiment, the fine-denier filament includes a polyester filament having a melting point of 250°C or more and a polyethylene filament having a melting point of 130°C to 150°C.

The fine-denier filament contains polyester and polyethylene, which are polymer components having strong hydrophobicity, and is advantageous in ensuring water repellency of the non-woven fabric. Further, it contains polyester and polyethylene, which have relatively low densities compared to other polymer components (for example, nylon) applied to spunbond non-woven fabrics for filters, and is therefore advantageous in reducing the weight of the non-woven fabric.

The polyester filament has a melting point of 250°C or more, or 250°C to 265°C, or 250°C to 260°C, or 255°C to 260°C.

As an example, the polyester filament may include at least one first polyester selected from the group consisting of polyethylene terephthalate, polyethylene naphthalate, polybutylene terephthalate, polytetrafluoroethylene, and copolymers thereof, which satisfy the above melting point range.

In consideration of the formation of the split type filament and the mechanical properties of the fine-denier filament, the polyester filament preferably includes polyester having an intrinsic viscosity of 0.6 to 0.9 dl/g.

The polyethylene filament has a melting point that is at least 100°C lower than the polyester filament. Preferably, the polyethylene filament has a melting point of 130°C to 150°C, or 130°C to 145°C, or 130°C to 140°C.

In consideration of the formation of the split type filament and the mechanical properties of the fine-denier filament, the polyethylene filament preferably includes polyethylene having a melt index of 10 to 30 g/10 min, which is measured according to ISO1133-1:2011 at a temperature of 190°C and under a load of 2.16 kg.

In order to ensure the split quality of the split type filament (e.g., the shape of the split interface and its cross section, split ratio, etc.), the physical properties of the fine-denier filament, and the physical properties of the spunbond non-woven fabric for filters, it is preferable that the polyester and polyethylene satisfy the above characteristics.

As an example, the fine-denier filament includes 60 to 90 wt% of a polyester filament having a melting point of 250°C or more and 10 to 40 wt% of a polyethylene filament having a melting point of 130°C to 150°C. As another example, the fine-denier filament may include 60 to 85 wt% of the polyester filament and 15 to 40 wt% of the polyethylene filament. As yet another example, the fine-denier filament may include 60 to 80 wt% of the polyester filament and 20 to 40 wt% of the polyethylene filament.

In order to secure the bonding strength of the fine-denier filaments in the fiber web, the polyethylene filaments are preferably contained in an amount of 10 wt% or more, or 15 wt% or more, or 20 wt% or more.

However, when the fiber web contains an excessive amount of the polyethylene filament, the mechanical properties and heat resistance of the non-woven fabric may decrease due to a decrease in the content of the polyester filament, and the workability of the spinning process and subsequent processes may decrease. Therefore, the polyethylene filament is preferably contained in an amount of 40 wt% or less.

According to one embodiment, the polyethylene filament among the fine-denier filaments includes a light stabilizer.

The light stabilizer is an additive applied to maintain the electrostatic performance and tensile strength of the electrostatically treated spunbond non-woven fabric. Preferably, in order to exhibit a uniform effect and improve dispersibility, the light stabilizer is added to the polyethylene filament through masterbatch processing with the polyethylene.

The specific type of the light stabilizer is not particularly limited, and may be selected within a range that does not inhibit the formation of split type filaments and their physical properties. Preferably, the light stabilizer may be a hindered amine compound. Specifically, the light stabilizer may be at least one compound selected from the group consisting of tetrakis(1,2,2,6,6-pentamethyl-4-piperidyl)butane-1,2,3,4-tetracarboxylate, tetrakis(2,2,6,6-tetramethyl-4-piperidyl)butane-1,2,3,4-tetracarboxylate, bis(1,2,2,6,6-pentamethyl-4-piperidyl)sebacate, bis(2,2,6,6-tetramethyl-4-piperidyl)sebacate, bis(1-undecanoxy-2,2,6,6-tetramethylpiperidin-4-yl)carbonate, 1,2,2,6,6-pentamethyl-4-piperidyl methacrylate, 2,2,6,6-tetramethyl-4-piperidyl methacrylate, 2,2,6,6-tetramethylpiperidin-4-yl hexadecanoate, 2,2,6,6-tetramethylpiperidin-4-yl octadecanoate, Chimassorb^{®} 944, Chimassorb^{®} 2020, Tinuvin^{®} 622, Tinuvin^{®} 765, and Tinuvin^{®} XT 55.

According to one embodiment, the polyethylene filament includes 0.1 wt% to 5.0 wt% of a light stabilizer based on the content of polyethylene.

In order to exhibit and maintain electrostatic performance due to the addition of the light stabilizer, the light stabilizer is preferably contained in an amount of 0.1 wt% or more, 0.3 wt% or more, or 0.5 wt% or more based on the content of the polyethylene.

However, when the light stabilizer is contained in an excessive amount, the pressure of the spinning pack may increase during the production of the split type filament, the workability may deteriorate such as occurrence of yarn breakage, and the physical properties of the non-woven fabric may deteriorate. Therefore, the light stabilizer is preferably contained in an amount of 5.0 wt% or less, or 4.0 wt% or less, or 3.0 wt% or less, based on the content of the polyethylene.

Specifically, the light stabilizer may be contained in an amount of 0.1 to 5.0 wt%, or 0.3 to 5.0 wt%, or 0.3 to 4.0 wt%, or 0.5 to 4.0 wt%, or 0.5 to 3.0 wt%, based on the content of the polyethylene.

The weight and thickness of the spunbond non-woven fabric for filters are not particularly limited, and can be adjusted within an appropriate range depending on the field of application.

Preferably, the spunbond non-woven fabric for filters may have a weight per unit area of 30 g/m² to 120 g/m², or 50 g/m² to 120 g/m², or 50 g/m² to 110 g/m².

Further, the spunbond non-woven fabric for filters may have a thickness of 0.1 mm to 5.0 mm, or 0.1 mm to 4.0 mm, or 0.1 mm to 3.0 mm.

The spunbond non-woven fabric for filters can be applied to gas turbine filters, dust collection filters, air filters, and the like. Further, the spunbond non-woven fabric for filters can be widely used, such as automobile cabin filters, bag filters, air conditioning filters, air purification filters, HEPA filters, ULPA filters, and current collecting masks.

According to another embodiment of the disclosure, there is provided a method for preparing the spunbond non-woven fabric for filters, the method comprising the steps of:
forming split type filaments that are split into fine-denier filaments including a polyester filament and a polyethylene filament,
forming a fiber web including the split type filaments,
thermally bonding the fiber web to form a pre-bonded fiber web,
applying a physical force to the pre-bonded fiber web to form a spunlace fiber web including the polyester filament and the polyethylene filament that are split from the split type filaments, and
thermally bonding the spunlace fiber web to form a spunbond non-woven fabric,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

According to one embodiment, the spunbond non-woven fabric for filters can be prepared by a method of forming a fiber web using split type filaments obtained by spinning polyester and polyethylene, followed by pre-bonding, spunlacing and thermally bonding.

In the preparation method, the properties of the polyester, the polyester filament, the polyethylene, and the polyethylene filament are the same as described above.

According to one embodiment, the step of forming the split type filament can be performed according to a conventional method for forming split type filaments using the polyester and the polyethylene as polymer components. As an example, in the above step, a spinneret designed so that the discharge holes are controlled to an appropriate number and the filament has a cross-sectional shape that is split into multiple may be used. In the split type filament, the content ratio of the polymer component and the fineness of the filament can be controlled by adjusting the number and shape of the discharge holes of the spinneret, the discharge amount of the polymer component, and the like.

The split form of the split type filament is not particularly limited, and may be determined depending on the shape of the spinneret. As an example, the split type filament may have a cross section such as an orange shape, a hollow shape, or a chrysanthemum shape. Further, the split type filament may be a multi-split filament that is split into 8 to 64 strands. Specifically, the multi-split type filament may be a multi-split filament that is split into 8, 16, 32, or 64 strands.

In the step of forming the split type filament, the spinning speed and tension can be adjusted in consideration of the fineness of the split type filament and the fine-denier filament. If necessary, a step of drawing the split type filament can be carried out.

According to one embodiment, the polyethylene filament among the fine-denier filaments includes a light stabilizer. Preferably, in order to exhibit a uniform effect and improve dispersibility, those which polyethylene and the light stabilizer are subjected to a masterbatch processing can be used in the step of forming the split type filament. The specific type and preferred content range of the light stabilizer are the same as described above.

A step of forming a fiber web containing the split type filaments is performed. The split type filaments are laminated on a continuously moving net conveyor by a common opening method such as an electrostatic charging method, a collision plate method, and an air flow diffusion method to form a fiber web.

A step of thermally bonding the fiber web to form a pre-bonded fiber web is performed. This step is a step of providing a weak bond to the fiber web to prevent deformation due to tension applied during transport of the fiber web.

The step of forming the pre-bonded fiber web may be performed by passing the fibrous web through heated calender rolls. The roll is heated to a temperature capable of melting the polyethylene filament to the extent that it can be bonded. As an example, the step of forming the pre-bonded fiber web may be performed at a temperature of 100 to 130°C and under a pressure of 80 to 100 N/cm₂.

A step of applying physical force to the pre-bonded fiber web to form a spunlace fiber web including the polyester filament and the polyethylene filament that are split from the split type filaments. The step is a step of splitting the split type filament into the fine-denier filament by using the incompatibility of the polyester and the polyethylene.

According to one embodiment, the step of forming the spunlace fiber web may be performed by water punching the pre-bonded fiber web at a water pressure of 80 kgf/cm² to 200 kgf/cm².

In order to ensure that the fine-denier filament can be sufficiently split from the split type filament, in the step of forming the spunlace fiber web, the pre-bonded fiber web is preferably water-punched with a water pressure of 80 kgf/cm² or more, or 100 kgf/cm² or more, or 120 kgf/cm² or more.

However, if the water pressure applied to the pre-bonded fiber web in the above step is excessive, the pre-bonded fiber web may be torn or punctured, and the distribution of the fine-denier filaments may become uneven. Therefore, in the step of forming the spunlace fiber web, the pre-bonded fiber web is preferably water-punched with a water pressure of 200 kgf/cm² or less, or 190 kgf/cm² or less, or 180 kgf/cm² or less.

Specifically, the water punching is performed with a water pressure of 80 to 200 kgf/cm², or 100 to 200 kgf/cm², or 100 to 190 kgf/cm², or 120 to 190 kgf/cm², or 120 to 180 kgf/cm².

Further, a step of thermally bonding the spunlace fiber web to form a spunbond non-woven fabric is performed. The step may be performed in a manner analogous to the step of forming the pre-bonded fibrous web. As an example, the step of forming the spunbond non-woven fabric may be performed by a method of passing the spunlace fiber web through heated calender rolls. The roll is heated to a temperature capable of melting the polyethylene filament to the extent that it can be bonded. As an example, the step of forming the spunbond non-woven fabric may be performed at a temperature of 110 to 150°C and under a pressure of 80 to 110 N/cm2.

Optionally, a step of electrostatically treating the spunbond non-woven fabric may be further performed. The method of electrostatically treating the spunbond non-woven fabric is not particularly limited, and any conventional method in the technical field to which the present disclosure pertains can be applied. As an example, in the step of electrostatically treating the spunbond non-woven fabric, methods such as corona discharge, plasma charge, and water charge using electrically charged water droplets may be applied to the spunbonded non-woven fabric.

### [Advantageous Effects]

According to the present disclosure, a spunbond non-woven fabric for filters that exhibits excellent filtration performance while having low pressure loss and high air permeability, and a method for preparing the same are provided.

### [DETAILED DESCRIPTION OF THE EMBODIMENTS]

Hereinafter, the preferred Examples are provided for better understanding of the invention. However, these Examples are given for illustrative purposes only and not intended to limit the scope of the present disclosure thereto.

### Example 1

60 wt% of the first component and 40 wt% of the second component were used to form 32 split type filaments having a fineness of 2 denier.

Here, polyethylene terephthalate(PET) having a melting point of 255°C and an intrinsic viscosity of 0.65 dl/g was used as the first component. As the second component, a polyethylene (PE; melting point of 133°C; and melt index of 12 g/10 min measured at a temperature of 190°C under a load of 2.16 kg) and a light stabilizer (hindered amine compound; Chimassorb^{®} 944 from BASF) which were subjected to masterbatch processing were used. Here, the light stabilizer was included in an amount of 3.0 wt% based on the content of polyethylene.

The split type filaments were laminated on a continuously moving net conveyor to form a fiber web.

The fiber web was passed through calender rolls maintaining a temperature of 110°C and a linear pressure of 90 N/cm² to form a pre-bonded fibrous web.

The pre-bonded fiber web was water-punched under a water pressure of 170 kgf/cm² to form a spunlace fiber web comprising fine-denier filaments having a fineness of about 0.06 denier that was split the split type filaments. The fine-denier filament included 60 wt% of a polyethylene terephthalate filament and 40 wt% of a polyethylene filament.

The spunlace fiber web was passed through a calender roll maintaining a temperature of 120°C and a linear pressure of 100 N/cm² to prepare a spunbond non-woven fabric (weight per unit area of 100 g/m²; thickness of 0.14 mm).

### Examples 2 to 4 and Comparative Examples 1 to 7

A spunbond non-woven fabric was prepared in the same manner as in Example 1, except that the content (wt%) of the first component and the second component, the polymer types of the first component and the second component, the content of the light stabilizer (wt% relative to the polymer content of the second component), whether or not the water punching was performed (O;X), or the water pressure of the water punching (kgf/cm²) were applied as described in Table 1 below.

**[Table 1]**

| | First component (polymer/wt%) | Second component (polymer/wt%) | Light stabilizer (wt%) | Water punching (O;X) | Water pressure of water punching (kgf/cm²) |
|---|---|---|---|---|---|
| Example 1 | PET / 60 | PE / 40 | 3.0 | O | 160 |
| Example 2 | PET / 60 | PE / 40 | 0.5 | O | 130 |
| Example 3 | PET / 80 | PE / 20 | 3.0 | O | 130 |
| Example 4 | PET / 80 | PE/20 | 0.5 | O | 170 |
| Comparative Example 1 | PET / 60 | PE / 40 | 3.0 | X | - |
| Comparative Example 2 | PET / 95 | PE/ 5 | 3.0 | O | 130 |
| Comparative Example 3 | PET / 60 | PE / 40 | 0.1 | O | 130 |
| Comparative Example 4 | PET / 60 | PE / 40 | 5.0 | - | - |
| Comparative Example 5 | PET / 60 | PET / 40 | 3.0 | O | 130 |
| Comparative Example 6 | PP / 60 | PE / 40 | 3.0 | O | 130 |
| Comparative Example 7 | PET / 60 | Nylon / 40 | 3.0 | O | 130 |

| | | | | | |
|---|---|---|---|---|---|
| *Second component polymer(PET) of Comparative Example 5: Polyethylene terephthalate having a melting point of 210°C and an intrinsic viscosity of 0.82 dl/g *First component polymer(PP) of Comparative Example 6: Polypropylene(PP) having a melting point of 165°C and a melt index of 40 g/10min (measured at a temperature of 190°C and under a load of 2.16 kg) *Second component polymer(Nylon) of Comparative Example 7: Nylon 6 having a melting point of 220°C and a melt viscosity of 1,100 poise (measured at 270°C and 1,000 shear rate) | | | | | |

### Test Example

### (1) Air permeability of non-woven fabric (ccs)

The air permeability (cm²/cm²/sec; ccs) of the non-woven fabrics according to Examples and Comparative Examples was measured using an Air Permeability Tester (FX 3300 LabAir IV; TEXTEST AG) according to the test method ASTM D 737-04. Non-woven fabric specimens were prepared by 10 pieces each with an area of 100 cm². An air pressure of 120 Pa was applied thereto. The air permeability was measured 10 times in total, and the average values are shown in Table 2 below.

### (2) Pressure loss (mmAq) and filtration efficiency (%)

The pressure loss (mmAq) and filtration efficiency (%) of the non-woven fabrics according to Examples and Comparative Examples were measured using Automated Filter Tester 8130 (TSI Incorporated).

An aerosol containing NaCl (particle size of 0.3*µ*m) was prepared by heating a 20 wt% NaCl aqueous solution. The non-woven fabric specimens (area of 100 cm²) according to Examples and Comparative Examples were mounted to a tester, and the aerosol was passed through the non-woven fabric specimens at an air flow speed of 32 LPM (surface wind speed of 5.33 cm/sec).

The air pressure before/after passing the non-woven fabric specimen was measured to determine the pressure loss (mmAq). The NaCl concentration before/after passing through the non-woven specimen was measured to calculate the filtration efficiency (%).

**[Table 2]**

| | Air permeability (ccs) | Pressure loss (mmAq) | Filtration efficiency (%) |
|---|---|---|---|
| Example 1 | 25 | 3.1 | 93.2 |
| Example 2 | 29 | 2.6 | 90.9 |
| Example 3 | 20 | 3.8 | 91.5 |
| Example 4 | 26 | 2.9 | 80.1 |
| Comparative Example 1 | 17 | 4.4 | 27.0 |
| Comparative Example 2 | 24 | 3.1 | 40.8 |
| Comparative Example 3 | 17 | 4.7 | 36.3 |
| Comparative Example 4 | - | - | - |
| Comparative Example 5 | 16 | 4.9 | 14.3 |
| Comparative Example 6 | 16 | 4.8 | 26.7 |
| Comparative Example 7 | 21 | 3.7 | 13.5 |

Referring to Table 1 and Table 2, it is confirmed that the spunbond non-woven fabrics of Examples have a filtration efficiency of 80.1% or more, and thus are excellent in filtration performance and exhibit an air permeability of 20 to 29 ccs and a pressure loss of 2.6 to 3.8 mmAq.

It is confirmed that the spunbond non-woven fabrics of Comparative Examples exhibit a low filtration efficiency of 40.8% or less, and have the air permeability or pressure loss at a level that does not reach those of Examples. In Comparative Example 4, the spinnability is poor in the step of forming the split type filament, and thus, the spunbond non-woven fabric could not be prepared.

Although the detailed description and the specific examples, while indicating preferred embodiments of the invention, are given by way of illustration only, those of ordinary skill in the art will realize readily that many changes and modifications may be made thereto without departing form the spirit or scope of the present disclosure.

## Claims

1. A spunbond non-woven fabric for filters comprising:
a fiber web formed by entangling fine-denier filaments that are split from split type filaments,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

2. The spunbond non-woven fabric for filters according to claim 1, wherein the split type filament has a fineness of 2 to 5 denier, and the fine-denier filament has a fineness of 0.05 to 0.2 denier.

3. The spunbond non-woven fabric for filters according to claim 1, wherein the polyethylene filament includes a polyester having an intrinsic viscosity of 0.6 to 0.9 dl/g.

4. The spunbond non-woven fabric for filters according to claim 1, wherein the polyethylene filament includes a polyethylene having a melt index of 10 to 30 g/10 min, which is measured at a temperature of 190°C and a load of 2.16 kg.

5. The spunbond non-woven fabric for filters according to claim 1, wherein the light stabilizer is a hindered amine compound.

6. The spunbond non-woven fabric for filters according to claim 1, wherein the light stabilizer is at least one compound selected from the group consisting of tetrakis(1,2,2,6,6-pentamethyl-4-piperidyl)butane-1,2,3,4-tetracarboxylate, tetrakis(2,2,6,6-tetramethyl-4-piperidyl)butane-1,2,3,4-tetracarboxylate, bis(1,2,2,6,6-pentamethyl-4-piperidyl)sebacate, bis(2,2,6,6-tetramethyl-4-piperidyl)sebacate, bis(1-undecanoxy-2,2,6,6-tetramethylpiperidin-4-yl)carbonate, 1,2,2,6,6-pentamethyl-4-piperidyl methacrylate, 2,2,6,6-tetramethyl-4-piperidyl methacrylate, 2,2,6,6-tetramethylpiperidin-4-yl hexadecanoate, 2,2,6,6-tetramethylpiperidin-4-yl octadecanoate, Chimassorb^{®} 944, Chimassorb^{®} 2020, Tinuvin^{®} 622, Tinuvin^{®} 765, and Tinuvin^{®} XT 55.

7. The spunbond non-woven fabric for filters according to claim 1, having a weight per unit area of 30 g/m² to 120 g/m².

8. The spunbond non-woven fabric for filters according to claim 1, having a thickness of 0.1 mm to 5.0 mm.

9. A method for preparing the spunbond non-woven fabric for filters as set forth in claim 1, the method comprising the steps of:
forming split type filaments that are split into fine-denier filaments including a polyester filament and a polyethylene filament,
forming a fiber web including the split type filaments,
thermally bonding the fiber web to form a pre-bonded fiber web,
applying a physical force to the pre-bonded fiber web to form a spunlace fiber web including the polyester filament and the polyethylene filament that are split from the split type filaments, and
thermally bonding the spunlace fiber web to form a spunbond non-woven fabric,
wherein the fine-denier filament contains 60 wt% to 90 wt% of a polyester filament having a melting point of 250°C or more and 10 wt% to 40 wt% of a polyethylene filament having a melting point of 130°C to 150°C, and
wherein the polyethylene filament contains 0.1 wt% to 5.0 wt% of a light stabilizer based on the content of polyethylene.

10. The method for preparing the spunbond non-woven fabric for filters according to claim 9, wherein the split type filament is a multi-split type filament that is split into 8 to 64 strands.

11. The method for preparing the spunbond non-woven fabric for filters according to claim 9, wherein the forming a spunlace fiber web is performed by water punching the pre-bonded fiber web under a water pressure of 80 kgf/cm² to 200 kgf/cm².
